# EUROPÄISCHE PATENTANMELDUNG

(11) **EP 3 981 587 A1**
(43) Veröffentlichungstag der Anmeldung: **13.04.2022**
(21) Anmeldenummer: 21200550.8
(22) Anmeldetag: 01.10.2021
(51) Int. Cl.: B32B 3/12, B32B 3/20, B32B 3/28, B32B 5/24, B32B 7/12, B32B 21/04, B32B 27/06, B32B 27/08

(54) **LEICHTBAUWAND MIT VERSTÄRKUNGSPROFIL**

(30) Priorität: 06.10.2020 DE 102020126091
(71) Anmelder: Elbe Flugzeugwerke GmbH, 01109 Dresden (DE)
(72) Erfinder: Graf, Sebastian, 01109 Dresden (DE); Kupietz, Robert, 01109 Dresdek (DE); Reissenweber, Uwe, 01109 Dresden (DE); Mueller, Thomas, 01109 Dresden (DE); Wolf, Johannes, 01109 Dresden (DE); Koellner, Markus, 01109 Dresden (DE)
(74) Vertreter: LKGLOBAL Lorenz & Kopf PartG mbB Patentanwälte

(57) **Zusammenfassung**

Es wird eine Leichtbauwand mit einer lokalen Verstärkung offenbart. Die Leichtbauwand umfasst ein Wandelement, das in Sandwich-Bauweise gefertigt ist und eine erste Deckschicht, eine zweite Deckschicht und eine dazwischen angeordnete Kernschicht aufweist. In der Kernschicht befindet sich an lokal stark belasteten Positionen der Leichtbauwand eine Ausnehmung, in die ein langgestrecktes Verstärkungsprofil eingebracht ist. Das Verstärkungsprofil weist einen ersten Schulterbereich, einen zweiten Schulterbereich, eine erste Seitenwand, eine zweite Seitenwand und eine untere Stützfläche auf. Die erste Seitenwand ist mit dem ersten Schulterbereich verbunden und die zweite Seitenwand ist mit dem zweiten Schulterbereich verbunden. Die untere Stützfläche verbindet die erste Seitenwand und die zweite Seitenwand, so dass zwischen der ersten Seitenwand, der zweiten Seitenwand und der unteren Stützfläche eine Kavität gebildet wird. Das langgestreckte Verstärkungsprofil stützt mit den Schulterbereichen und der unteren Stützfläche die erste Deckschicht und die zweite Deckschicht und verstärkt dadurch die Leichtbauwand lokal.

## Beschreibung

### TECHNISCHES GEBIET

Die vorliegende Offenbarung bezieht sich auf Leichtbauwände, insbesondere auf Leichtbautrennwände für Fahrzeuge, beispielsweise Luft- und Raumfahrzeuge.

### TECHNISCHER HINTERGRUND

Das Gewicht von Luftfahrzeugen ist ein relevanter Parameter und hat einen hohen Einfluss auf einige Flugeigenschaften und den Kraftstoffverbrauch. Insbesondere aus wirtschaftlicher und ökologischer Sicht ist es deshalb in der Luft- und Raumfahrt von großer Bedeutung, möglichst viele Komponenten in Leichtbauweise auszulegen und zu fertigen. Dies gilt sowohl für die Flugzeugkonstruktion an sich als auch für die Kabinenausstattung. Zur Gewichtsreduzierung ist die Fertigung von Kabinentrennwänden in Leichtbauweise, beispielsweise als Sandwich-Platten, bereits seit längerer Zeit üblich. Um die mechanische Festigkeit an besonders belasteten Bereichen von solchen Leichtbauplatten zu erhöhen, werden bisher üblicherweise großflächige Verstärkungsstrukturen, wie z.B. Strukturen aus Stahl oder glasfaserverstärktem Kunststoff, GFK, eingebracht. Aufgrund der großen Ausdehnung und des hohen Materialaufwands für solche Verstärkungsstrukturen, insbesondere bei hohen Wandstärken mit entsprechend hohen Laminatplattenstärken, erhöhen diese das Gesamtgewicht jedoch beträchtlich.

### BESCHREIBUNG

Es kann deshalb als Aufgabe der Erfindung angesehen werden, eine lokal verstärkte Leichtbauwand mit geringem Gewicht zur Verfügung zu stellen, die gewünschten mechanischen Anforderungen standhält.

Diese Aufgabe wird durch eine Leichtbauwand gemäß dem unabhängigen Patentanspruch 1 gelöst. Weitere Ausführungsformen ergeben sich aus den abhängigen Ansprüchen sowie aus der folgenden Beschreibung.

Gemäß einem Aspekt umfasst eine solche Leichtbauwand ein Wandelement und ein in einer Längsrichtung langgestrecktes Verstärkungsprofil. Das Verstärkungsprofil weist einen ersten Schulterbereich, einen zweiten Schulterbereich, eine erste Seitenwand, eine zweite Seitenwand und eine untere Stützfläche auf. Die erste Seitenwand ist mit dem ersten Schulterbereich verbunden und verläuft quer dazu und die zweite Seitenwand ist mit dem zweiten Schulterbereich verbunden und verläuft quer zu diesem. Die untere Stützfläche ist mit der ersten Seitenwand und der zweiten Seitenwand verbunden und bildet dadurch eine Kavität zwischen der ersten Seitenwand, der zweiten Seitenwand und der unteren Stützfläche. Das Wandelement weist eine erste Deckschicht, eine zweite Deckschicht und eine zwischen der ersten Deckschicht und der zweiten Deckschicht angeordnete Kernschicht auf. Das Verstärkungsprofil ist in eine Ausnehmung in der Kernschicht eingebracht. Die Kernschicht ist ein Wabenkern.

Das Wandelement ist dabei die unverstärkte Leichtbauwand, in welche das Verstärkungsprofil eingebracht wird. Ein solches Wandelement weist ein geringes Gewicht auf, ist allerdings den mechanischen Anforderungen nicht immer gewachsen, insbesondere wenn das Wandelement in bestimmten Bereichen höhere Lasten als in anderen Bereichen tragen muss. Um das Gewicht des Wandelements an sich nicht übermäßig ansteigen zu lassen, aber an besonders belasteten Stellen trotzdem die nötige mechanische Steifigkeit zu erzielen, ist das langgestreckte Verstärkungsprofil an diesen Stellen in das Wandelement eingebracht. Mechanisch besonders belastete Stellen können in Flugzeugen beispielsweise die Flurseite von Trennwänden sein, an welche z.B. Passagiere beim Durchgehen anstoßen können oder Bereiche, an denen eine externe Last angebracht ist. Das Verstärkungsprofil kann aber auch an anderen Stellen mit einer hohen, wünschenswerten Stabilität in das Wandelement eingebracht sein.

Das Wandelement ist ferner in Sandwich-Bauweise gefertigt. Dieses Wandelement umfasst die erste Deckschicht und die zweite Deckschicht, zwischen denen die Kernschicht eingebracht ist. Die zweite Deckschicht liegt also der ersten Deckschicht gegenüber und dazwischen befindet sich die Kernschicht.

Die Kernschicht kann dabei ein Element sein, das bezogen auf die Deckschichten eine niedrigere Massendichte, d.h. ein niedrigeres Gewicht pro Volumen, aufweist und das aus jedem geeigneten Material gefertigt sein kann.

Beispielsweise kann die Kernschicht ein Wabenkern, ein Schaumstoffkern oder ein Kern aus anderen geeigneten Leichtbaustoffen, wie beispielsweise Kork, sein. Ein Schaumstoffkern kann beispielsweise aus PVC-Schaumstoff (Polyvinylchlorid-Schaumstoff), aus PET-Schaumstoff (Polyethylenterephthalat-Schaumstoff) oder aus jedem anderen geeigneten Material gefertigt sein.

Die Deckschichten hingegen sind aus stabileren Materialien mit höherer Massendichte gebildet. Dazu kann jedes geeignet Material wie beispielsweise Holz, Kunststoffe oder verschiedene Laminate verwendet werden. Die Deckschichten könnten beispielsweise aus in eine Kunststoffmatrix eingebetteten Glasfasern und/oder Kohlefasern oder aus Kohlenstofffaser-Laminat gefertigt sein. Diese Aufzählung ist jedoch nur beispielhaft und andere Materialien sind ebenfalls denkbar.

Das langgestreckte Verstärkungsprofil dient dazu, die Oberflächen, d.h. die Deckschichten des Wandelements, entlang seiner Länge abzustützen und dadurch eine Verformung, insbesondere ein Verbiegen des Wandelements durch mechanische Kräfte an den belasteten Stellen, zu verhindern. Um dies zu erreichen, ist das Verstärkungsprofil in eine Ausnehmung in die Kernschicht des Wandelements eingebracht und wird zusammen mit der Kernschicht von der ersten Deckschicht und der zweiten Deckschicht abgedeckt bzw. ist zwischen den beiden Deckschichten angeordnet.

Der erste Schulterbereich und der zweite Schulterbereich des langgestreckten Verstärkungsprofils dienen dabei dazu, die erste Deckschicht des Wandelements von innerhalb des Wandelements, d.h. von innerhalb der Ausnehmung in der Kernschicht, abzustützen und daran anzuliegen, um eine Kraftübertragung zu ermöglichen. Die Schulterbereiche erstrecken sich dabei bevorzugt über die gesamte Länge des Verstärkungsprofils in der Längsrichtung und sind in einer Breitenrichtung voneinander beabstandet. Die Längsrichtung ist dabei die Richtung, in die das Schnittprofil des Verstärkungsprofils extrudiert ist, um die dreidimensionale Struktur der Verstärkungsprofils zu bilden. Der erste Schulterbereich und der zweite Schulterbereich können dabei flächig so ausgebildet sein, dass die Schulterbereiche die zweite Deckschicht des Wandelements von innen über Ihre gesamte Fläche abstützen bzw. berühren. Die Schulterbereiche können allerdings auch gebogen sein, d.h. so dass das eine Querschnittsprofil senkrecht zu der Längsrichtung des Verstärkungsprofils einen bogenförmigen Verlauf aufweist. In diesem Fall stützen der erste Schulterbereich und der zweite Schulterbereich das Wandelement also nicht über die gesamte Fläche, sondern nur entlang eines Streifens, der in der Längsrichtung des Verstärkungsprofils verläuft, oder nur punktuell.

Die erste Seitenwand und die zweite Seitenwand sind mit dem ersten Schulterbereich bzw. mit dem zweiten Schulterbereich so verbunden, dass diese sich jeweils bevorzugt über die gesamte Länge der Schulterbereiche, d.h. über die gesamte Ausdehnung der Schulterbereiche, in der Längsrichtung des Verstärkungsprofils erstrecken und jeweils quer zu den Schulterbereichen verlaufen. Die erste Seitenwand und die zweite Seitenwand können dabei winklig (d.h. quer im Sinne von unter einem Winkel größer als 0° und kleiner als 180° zueinander verlaufend) mit dem ersten Schulterbereich bzw. dem zweiten Schulterbereich verbunden sein. Insbesondere kann eine durch die erste Seitenwand gebildete Ebene also senkrecht oder im Wesentlichen senkrecht zu dem ersten Schulterbereich verlaufen, und eine Ebene, die durch die zweite Seitenwand gebildet wird, kann senkrecht oder im Wesentlichen senkrecht zu dem zweiten Schulterbereich verlaufen. Jedoch können die Seitenwände auch in anderer Art und Weise, beispielsweise in einem bogenförmigen oder geschwungenen kontinuierlichen Übergang, mit den jeweiligen Schulterbereichen verbunden sein, so dass das langgestreckte Verstärkungsprofil ein wellenförmiges Schnittprofil, ähnlich dem eines Wellbleches, aufweist.

Die untere Stützfläche des Verstärkungsprofils dient dazu, die erste Deckschicht des Wandelements, die der zweiten Deckschicht gegenüberliegt, von innerhalb des Wandelements, d.h. von innerhalb der Ausnehmung in der Kernschicht, abzustützen, und verbindet die erste Seitenwand und die zweite Seitenwand des Verstärkungsprofils. Ebenso wie die Seitenwände, erstreckt sich die untere Stützfläche bevorzugt entlang der gesamten Länge des Verstärkungsprofils in der Längsrichtung. Auch die untere Stützfläche kann dabei winklig mit sowohl der ersten Seitenwand als auch der zweiten Seitenwand verbunden sein. Insbesondere kann die untere Stützfläche so mit der ersten Seitenwand und der zweiten Seitenwand verbunden sein, dass eine durch die untere Stützfläche gebildete Ebene die durch die Seitenwände gebildeten Ebenen senkrecht, oder im Wesentlichen senkrecht, schneidet, falls die erste Seitenwand und die zweite Seitenwand senkrecht zu dem ersten Schulterbereich bzw. dem zweiten Schulterbereich angeordnet sind. In einer solchen Ausführungsform ist die untere Stützfläche also im Wesentlichen parallel zu dem ersten Schulterbereich und dem zweiten Schulterbereich angeordnet. Ebenso wie die Schulterbereiche, kann die untere Stützfläche jedoch auch ein gebogenes Querschnittsprofil aufweisen, so dass die untere Stützfläche das Wandelement nicht über die gesamte Fläche der Stützfläche stützt, sondern nur entlang eines Streifens oder punktuell in der Längsrichtung. Auch die untere Stützfläche kann jedoch kontinuierlich, d.h. nicht winklig, in die erste Seitenwand und die zweite Seitenwand übergehen. In einer solchen Ausführungsform weist das Verstärkungsprofil also eine wellblechartige Form auf.

Allgemein bilden die erste Seitenwand, die zweite Seitenwand und die untere Stützfläche durch ihre Anordnung zueinander eine Kavität, die, wenn man von Richtung der zweiten Deckschicht aus, an der sich die beiden Schulterbereiche befinden, in eine Tiefenrichtung, d.h. einer Normalenrichtung bezüglich der Leichtbauwand, blickt, eine Vertiefung oder eine Art Nut zwischen den beiden Schulterabschnitten entlang der Längsrichtung des Verstärkungsprofils definiert.

Durch die so definierte Form des langgestreckten Verstärkungsprofils ist dieses insbesondere gegen Verbiegungen entlang der Längsrichtung sehr stabil und verstärkt die Wand, so dass diese sich weniger leicht verformt oder verbiegt.

Gemäß einer Ausführungsform verlaufen der erste Schulterbereich und der zweite Schulterbereich parallel zu der zweiten Deckschicht.

In dieser Ausführungsform sind der erste Schulterbereich und der zweite Schulterbereich demnach flächig ausgebildet. Dadurch wird eine Kraft, die auf die Deckschicht aufgebracht wird, gleichmäßig über die vollständige Fläche der Schulterbereiche übertragen. Dies verbessert die Verstärkung der Leichtbauwand bzw. des Wandelements.

Falls die Dicke des Verstärkungsprofils so ausgelegt ist, dass sie der Dicke der Kernschicht entspricht, berühren somit der erste Schulterbereich und der zweite Schulterbereich die zweite Deckschicht mit ihrer gesamten äußeren Oberfläche. Dadurch wird eine maximale Stützwirkung gegenüber der zweiten Deckschicht erzielt. Die Schulterbereiche können jedoch auch nicht parallel, d.h. unter einem gewissen Winkel abweichend von 0° oder 180° bezüglich der Deckschichten, verlaufen.

Gemäß einer weiteren Ausführungsform liegen der erste Schulterbereich und der zweite Schulterbereich in einer gemeinsamen Ebene.

Das bedeutet, dass eine von dem ersten Schulterbereich aufgespannte Ebene mit einer von dem zweiten Schulterbereich aufgespannten Ebene identisch ist. Dadurch kann die Deckschicht einer flach ausgebildeten Leichtbauwand, d.h. einer Leichtbauwand ohne sprunghafte Veränderungen der Materialstärke in Tiefenrichtung bzw. sprunghafte Veränderungen der Materialdicke, verstärkt werden. Es ist beispielsweise auch denkbar, dass die gemeinsame Ebene des ersten Schulterbereichs und des zweiten Schulterbereichs nicht parallel zu einer von der unteren Stützfläche aufgespannten Ebene verläuft, sondern unter einem gewissen Winkel abweichend von 90° zu der ersten und/oder zweiten Seitenwand. So kann beispielsweise auch eine Leichtbauwand verstärkt werden, die einen keilförmigen Querschnitt aufweist, d.h. deren Tiefe (Dicke) sich über die Ausdehnung der Leichtbauwand kontinuierlich verändert.

Die Kernschicht ist ein Wabenkern.

Solche Wabenkerne können eine aus verschiedenen Kunststoffen, Pappen, Metallen oder anderen geeigneten Materialien aufgebaute Wabenstruktur in der Kernschicht beinhalten. Die Wabenkerne sind so geformt, um eine maximale Stabilität bei gleichzeitig geringem Gewicht zu erhalten. Der allgemeine Aufbau von Leichtbauwände mit Wabenkernen ist aus dem Stand der Technik bekannt. Die Stabilität von Wabenkernplatten könnte beispielsweise zusätzlich zu dem länglichen Verstärkungsprofil lokal verstärkt werden, indem die Wabenkerne an besonders belasteten Stellen beispielsweise mit Blähglas, Blähton oder anderen geeigneten Füllstoffen aufgefüllt werden.

Gemäß einer weiteren Ausführungsform sind die erste Seitenwand, die zweite Seitenwand und die untere Stützfläche des Verstärkungsprofils U-förmig miteinander verbunden.

Dies bedeutet, dass der Querschnitt des Verstärkungsprofils ein U-förmiges Profil aufweist. Die erste Seitenwand und die zweite Seitenwand sind also im Wesentlichen parallel zueinander angeordnet und werden senkrecht dazu auf der den beiden Schulterbereichen gegenüberliegenden Seite von der unteren Stützfläche miteinander verbunden. So kann, insbesondere falls der erste Schulterbereich und der zweite Schulterbereich parallel zu der unteren Stützfläche angeordnet sind, eine maximale Stützwirkung gegen Normalkräfte auf die Leichtbauwand erreicht werden, da diese Kräfte direkt auf die Schulterbereiche des Verstärkungsprofils einwirken und über die Seitenwände des Verstärkungsprofils auf die untere Stützfläche übertragen werden. Zudem erhält das Verstärkungsprofil dadurch eine hohe Steifigkeit gegen Verformungen entlang der Längsrichtung.

Gemäß einer weiteren Ausführungsform ist das Verstärkungsprofil ein Bauteil ausgewählt aus der Gruppe bestehend aus einem thermoplastischen Formteil, einem pultrodiertem Profil, einem Metallprofil, einem Resin-Transfer-Moulding-Teil (RTM-Teil) und einem carbonfaserverstärktem Kunststoffteil (CFK-Teil).

Bei diesen Teilen handelt es sich um leichtgewichtige Bauteile, die eine ausreichende Steifigkeit für ein Verstärkungsprofil gemäß der vorliegenden Offenbarung zur Verfügung stellen. Bevorzugt ist das Verstärkungsprofil dabei ein CFK-Teil, das mittels eines VAP (Vacuum Assisted Process) gefertigt ist.

Gemäß einer weiteren Ausführungsform sind der erste Schulterbereich und der zweite Schulterbereich mit der zweiten Deckschicht verklebt. Die untere Stützfläche ist mit der ersten Deckschicht verklebt.

Damit Kräfte von den Deckschichten gut auf das Verstärkungsprofil übertragen werden, ist das Verstärkungsprofil bevorzugt mit den Deckschichten fest verbunden. Dadurch kann verhindert werden, dass die zweite Deckschicht sich gegen den ersten Schulterbereich und den zweiten Schulterbereich verschiebt und dass die erste Deckschicht sich gegen die untere Stützfläche verschiebt. Beispielsweise wird dazu ein spezieller Klebstoff, beispielsweise ein Klebefilm oder in einer anderen Bereitstellungs- und Verwendungsform, der sich unter Druck und Temperatur zu Kleber wandelt, verwendet. Ein solcher Klebevorgang wird als separater Klebeprozess durchgeführt. Es ist jedoch beispielsweise auch möglich, dass das Verstärkungsprofil in ungehärteter Form in die Ausnehmung in der Kernschicht eingebracht wird und dann zusammen mit den Deckschichten des Wandelements zusammengepresst und ausgehärtet wird. Auf diese Art und Weise, wenn beim Aushärten die Schulterbereiche in Kontakt mit der zweiten Deckschicht sind und die untere Stützfläche in Kontakt mit der ersten Deckschicht ist, werden die Schulterbereiche gleichzeitig mit der zweiten Deckschicht verklebt und die untere Stützfläche wird gleichzeitig mit der ersten Deckschicht verklebt.

Das Verstärkungsprofil kann aber auch in anderer geeigneter Art und Weise fest mit den Deckschichten verbunden werden. Beispielsweise ist denkbar, das Verstärkungsprofil über Nieten mit den Deckschichten des Wandelements zu verbinden.

Gemäß einer weiteren Ausführungsform ist die Kavität mit einem Kernelement gefüllt.

Um die zweite Deckschicht über der Kavität in dem Verstärkungsprofil zu stützen, kann in die Kavität ein Kernelement eingebracht sein. Bevorzugt füllt das Kernelement die Kavität vollständig aus. Dadurch kann beispielsweise verhindert werden, dass die Deckschicht bricht, wenn auf diese über der Kavität eine Last aufgebracht wird. Das Kernelement kann bevorzugt, zur Reduzierung des Gewichts, ebenfalls als Leichtbaukernelement, wie beispielsweise als Wabenkern oder als Schaumstoffkern, wie oben beschrieben, ausgelegt sein. Es ist jedoch grundsätzlich auch denkbar, jedes andere geeignete Material für das Kernelement zu verwenden.

Gemäß einer weiteren Ausführungsform weist das Kernelement eine niedrigere Dichte als die Kernschicht auf.

Da das in die Kavität eingebrachte Kernelement vorwiegend dazu gedacht ist, die Deckschicht über der Kavität abzustützen und keine großen Lasten aufnehmen muss, kann ein Kernelement verwendet werden, das eine niedrigere Massendichte, d.h. ein niedrigeres Gewicht pro Volumeneinheit, aufweist. Dadurch wird das Gewicht des Kernelements und damit auch das Gesamtgewicht der Leichtbauwand, bei gleichzeitig ausreichender Stützung der Deckschicht über der Kavität, weiter reduziert. Beispielsweise kann dazu ein Wabenkern eingebracht sein, der aus einem leichten Material hergestellt wurde.

Gemäß einer weiteren Ausführungsform entspricht eine Ausdehnung des Verstärkungsprofils in einer Tiefenrichtung einer Tiefe der Kernschicht.

Mit Tiefe bzw. Tiefenrichtung ist hier die Dicke, d.h. die räumliche Ausdehnung in der Richtung normal zu der Leichtbauwand, und die entsprechende Richtung gemeint. Indem das Verstärkungsprofil die gleiche Tiefe wie die Kernschicht aufweist, steht der erste Schulterbereich und der zweite Schulterbereich in Kontakt zu der zweiten Deckschicht und die untere Stützfläche steht in Kontakt mit der ersten Deckschicht. Mit anderen Worten erstreckt sich das Verstärkungsprofil also über die gesamte Tiefe (Materialstärke) der Kernschicht, d.h. von Deckschicht zu Deckschicht. Dadurch können auf die Deckschichten der Leichtbauwand aufgebrachte Verformungslasten direkt auf das Verstärkungsprofil übertragen werden, was zu einer erhöhten Steifigkeit der Leichtbauwand führt.

Zusammenfassend wird durch die Erfindung also eine Leichtbauwand zur Verfügung gestellt, die ein möglichst geringes Gewicht aufweist, aber gleichzeitig an besonders belasteten Stellen zusätzlich durch eine leichtgewichtige Struktur verstärkt ist, um Steifigkeitsanforderungen zu erfüllen. Somit kann auf gängige schwere flächige Verstärkungsstrukturen verzichtet werden, wodurch das Gesamtgewicht einer Leichtbautrennwand deutlich reduziert werden kann.

### KURZBESCHREIBUNG DER FIGUREN

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- **Fig. 1**: Eine schematische Kabinett-Projektion eines Verstärkungsprofils gemäß einer Ausführungsform.
- **Fig. 2**: Ein schematisches Schnittprofil des in eine Leichtbauwand, bzw. in ein Wandelement, eingebrachten Verstärkungsprofils von Fig. 1 gemäß einer Ausführungsform.
- **Fig. 3**: Ein schematisches Schnittprofil einer Leichtbauwand, bzw. eines Wandelements, mit einer Ausnehmung vor dem Einbringen des Verstärkungsprofils gemäß einer Ausführungsform.
- **Fig. 4**: Eine schematische Kabinett-Projektion der Leichtbauwand, bzw. des Wandelements, aus Fig. 3 mit einer Ausnehmung vor dem Einbringen des Verstärkungsprofils gemäß einer Ausführungsform.

### DETAILLIERTE BESCHREIBUNG VON AUSFÜHRUNGSFORMEN

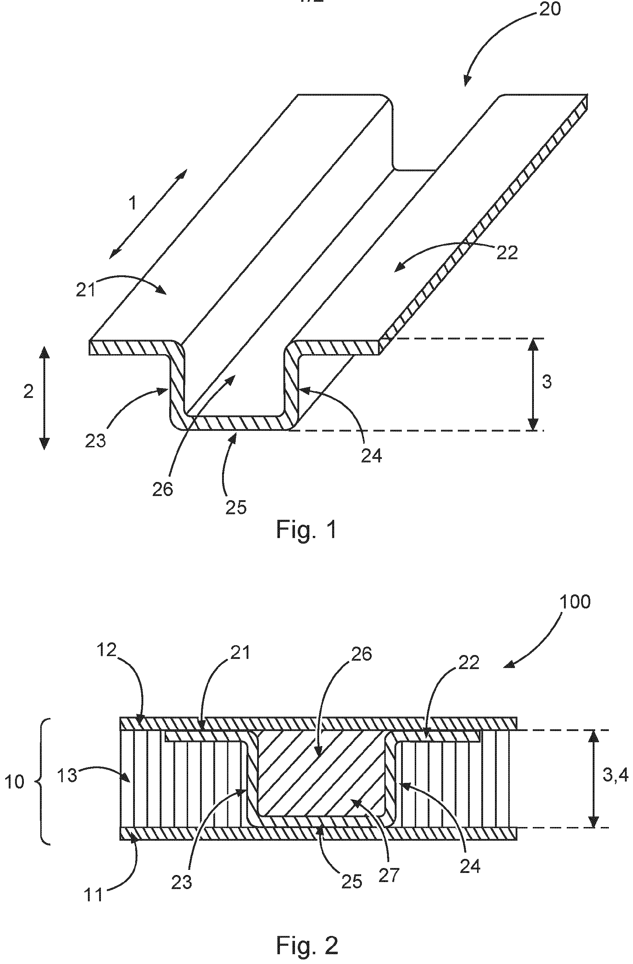

Fig. 1 zeigt ein Verstärkungsprofil 20 gemäß einer beispielhaften Ausführungsform, das konfiguriert ist, um in ein Wandelement 10 zur Verstärkung des Wandelements 10 eingebracht zu werden. Das Verstärkungsprofil 20 weist einen ersten Schulterbereich 21, einen zweiten Schulterbereich 22, eine erste Seitenwand 23, eine zweite Seitenwand 24 und eine untere Stützfläche 25 auf.

Die erste Seitenwand 23 ist mit dem ersten Schulterbereich 21 verbunden und die zweite Seitenwand 24 ist mit dem zweiten Schulterbereich 22 verbunden. Die untere Stützfläche 25 verbindet wiederum die erste Seitenwand 23 und die zweite Seitenwand 24, d.h. die untere Stützfläche ist an ihren jeweiligen terminalen Enden mit den terminalen Enden der ersten Seitenwand 23 und der zweiten Seitenwand 24 verbunden.

Das Verstärkungsprofil 20 ist in einer Längsrichtung 1 langgestreckt und weist eine Ausdehnung 3 in einer Tiefenrichtung 2 auf, wobei die Ausdehnung 3 dem senkrechten Abstand zwischen einer Außenseite des ersten Schulterbereichs 21 und des zweiten Schulterbereichs 22 und einer Außenseite der unteren Stützfläche 25 entspricht. Die Ausdehnung 3 definiert also die Gesamttiefe des Verstärkungsprofils 20. Das Verstärkungsprofil 20 kann auch als Hutprofil bezeichnet werden.

Auch wenn das Verstärkungsprofil 20 in Fig. 1 als lineares bzw. geradliniges Element gezeigt ist, ist diese Form nicht einschränkend zu verstehen. Das Verstärkungsprofil 20 kann auch gekrümmt bzw. gebogen sein, solange die Schulterbereiche 21, 22 an einer Deckschicht anliegen und die untere Stützfläche 25 an der anderen Deckschicht anliegt.

Der erste Schulterbereich 21 und der zweite Schulterbereich 22 sind zudem in einer gemeinsamen Ebene angeordnet und flächig ausgebildet, und sind damit so konfiguriert, dass diese bündig und mit ihrer ganzen Fläche an einer Deckschicht, wie beispielsweise der zweiten Deckschicht 12 aus Fig. 2, anliegen können, um damit eine maximale Stützwirkung gegenüber der Deckschicht entfalten zu können.

Die erste Seitenwand 23 und die zweite Seitenwand 24 verlaufen im Wesentlichen senkrecht zu dem ersten Schulterbereich 21 und dem zweiten Schulterbereich 22, d.h. die erste Seitenwand 23 und die zweite Seitenwand 24 befinden sich, abgesehen von fertigungsbedingten Toleranzen, jeweils in einer Ebene, die durch die Längsrichtung 1 und die Tiefenrichtung 2 aufgespannt wird, oder sind parallel zu einer solchen Ebene.

Die untere Stützfläche 25 verläuft zudem parallel zu dem ersten Schulterbereich 21 und dem zweiten Schulterbereich 22 und ist damit so konfiguriert, dass diese ebenso wie der erste Schulterbereich 21 und der zweite Schulterbereich 22 mit ihrer ganzen Fläche an einer anderen Deckschicht, wie beispielsweise der ersten Deckschicht 11 aus Fig. 2, anliegen kann, welche der Deckschicht, an der die Schulterbereiche 21, 22 anliegen, gegenüberliegt.

Die erste Seitenwand 23, die zweite Seitenwand 24 und die untere Stützfläche 25 bilden durch ihre Anordnung eine Kavität 26, die einer Nut oder einer länglichen Ausnehmung in der Längsrichtung 1 entspricht. Mit anderen Worten sind also die erste Seitenwand 21, die zweite Seitenwand 22 und die untere Stützfläche 25 des Verstärkungsprofils 20 so angeordnet, dass diese eine U-förmige Struktur bilden.

Ein solches Verstärkungsprofil 20 weist eine hohe Steifigkeit, insbesondere gegen Verbiegungen entlang der Längsrichtung 1, auf. Lasten auf die Deckschichten werden zudem durch die senkrechte Anordnung der Seitenwände 23, 24 zu den Schulterbereichen 21, 22 und der unteren Stützfläche 25 in vorteilhafter Weise zwischen den Deckschichten übertragen und erhöhen damit die Biegefestigkeit oder Steifigkeit der Leichtbauwand 100 an mechanisch stark belasteten Stellen.

Fig. 2 zeigt eine Querschnittsansicht einer Leichtbauwand 100 gemäß einer Ausführungsform, welche ein Wandelement 10 und das Verstärkungsprofil 20 aus Fig. 1 beinhaltet. Das Wandelement 10 ist eine Leichtbauwand in Sandwich-Bauweise, die eine erste Deckschicht 11, eine zweite Deckschicht 12 und eine Kernschicht 13 aufweist. Zudem weist die Kernschicht 13 eine Dicke oder Tiefe 4 auf, die in der dargestellten Ausführungsform der Ausdehnung 3 des Verstärkungsprofils 20 in der Tiefenrichtung 2 entspricht.

Das Wandelement 10 kann eine beliebige unverstärkte Leichtbauwand in Sandwich-Bauweise sein. Die Deckschichten 11, 12 können, wie oben beschrieben, beispielsweise aus Holz, aus Kunststoff, aus in Phenolkleber getränktem Glasfasergeflecht, aus Kohlenstofffaser-Laminat oder jedem anderen geeigneten Material gefertigt sein. Die Kernschicht 13 kann ein beliebiger Kern, wie beispielsweise ein Wabenkern oder ein Schaumstoffkern, wie oben beschrieben, sein. Auch für die Kernschicht 13 sind jedoch alle geeigneten Materialien und Bauweisen möglich, insbesondere Materialien und Bauweisen, mit denen die Massendichte, d.h. das Gewicht pro Volumeneinheit, der Kernschicht 13 geringer ist als die Massendichte der Deckschichten 11, 12.

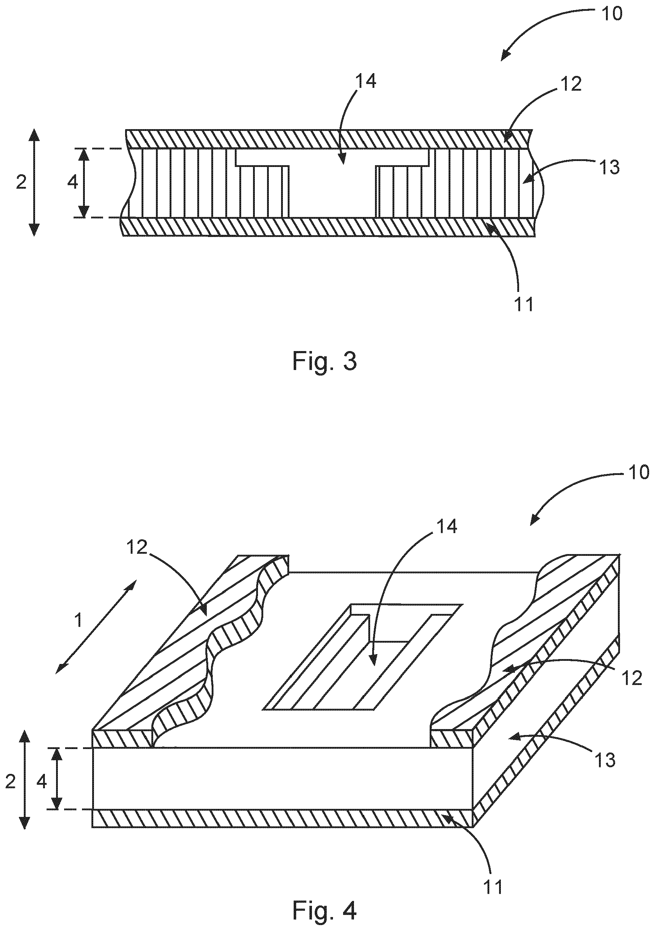

Das Verstärkungsprofil 20 ist in eine Ausnehmung in der Kernschicht 13, wie beispielsweise in die in den Fig. 3 und 4 dargestellte Ausnehmung 14, eingebracht. Dadurch, dass die Ausdehnung 3 des Verstärkungsprofils 20 in der Tiefenrichtung 2 der Tiefe 4 der Kernschicht 13 entspricht, liegen der erste Schulterbereich 21 und der zweite Schulterbereich 22 von innen an der zweiten Deckschicht 12 an und die untere Stützfläche 25 liegt von innen an der ersten Deckschicht 11 an.

Zudem ist die Kavität 26 in diesem Beispiel mit einem zusätzlichen Kernelement 27 befüllt, wobei es sich ebenfalls um einen beliebigen Leichtbaukern, also insbesondere um einen Wabenkern oder einen Schaumstoffkern, handeln kann. Das Kernelement 27 muss allerdings keinen besonders hohen Lasten standhalten, sondern ist lediglich dazu gedacht, den Teil der Deckschicht 12, der über der offenen Seite der Kavität 26 liegt, abzustützen, um so die Gefahr von Beschädigungen der zweiten Deckschicht 12 zu reduzieren. Das Kernelement 27 kann deshalb aus einem weniger stabilen Kernmaterial als die Kernschicht 13 gefertigt sein, also insbesondere aus einem Kernmaterial, das eine niedrigere Massendichte, d.h. ein niedrigeres Gewicht pro Volumeneinheit, als die Kernschicht 13 aufweist. Dadurch kann eine weitere Gewichtsreduzierung der Leichtbauwand 100 erreicht werden. Allerdings kann das Kernelement 27 auch aus dem gleichen Material gefertigt sein wie die Kernschicht 13 oder auch komplett entfallen.

Ferner ist in dem Beispiel von Fig. 2 zwischen dem ersten Schulterbereich 21, dem zweiten Schulterbereich 22, der oberen Seite des Kernelements 27 und der zweiten Deckschicht 12 einerseits und zwischen der unteren Stützfläche 25 und der ersten Deckschicht 11 andererseits jeweils eine Klebeschicht angebracht, um die Deckschichten 11, 12 mit der jeweiligen Seite des Verstärkungsprofils 20 zu verkleben. In der dargestellten Variante handelt es sich dabei um einen Klebstoff, wie beispielsweise einen Klebefilm, der in einem separaten Klebeprozess aufgebracht wird und sich unter Druck und Temperatur zu Kleber wandelt.

Es sind jedoch auch andere Klebelösungen, oder allgemein Verbindungslösungen, möglich. Beispielsweise könnte das Verstärkungsprofil 20 als vorgeformte aber ungehärtete Preform in die Ausnehmung 14 eingebracht werden und dann, nach dem Aufbringen der Deckschichten 11, 12, zusammen mit den Deckschichten 11, 12 unter Druck ausgehärtet werden, wodurch eine Verbindung zwischen den Deckschichten 11, 12 und dem Verstärkungsprofil 20 entsteht. Das Verstärkungsprofil 20 könnte jedoch beispielsweise auch mit Nieten oder auf andere geeignete Weise fest mit den Deckschichten 11, 12 verbunden werden.

Fig. 3 zeigt eine Querschnittsansicht eines Wandelements 10 (beispielsweise des Wandelements 10 aus Fig. 2) vor dem Einbringen des Verstärkungsprofils 20. Das Wandelement 10 weist die erste Deckschicht 11, die zweite Deckschicht 12 und die Kernschicht 13 auf. Die Kernschicht 13 weist die Tiefe 4 auf. In die Kernschicht ist die Ausnehmung 14 eingebracht, beispielsweise durch Ausfräsen oder Ausschneiden vor dem Aufbringen der zweiten Deckschicht 12. Das Profil der Ausnehmung 14 ist dem Außenprofil des einzubringenden Verstärkungsprofils 20 angepasst, es handelt sich bei der Ausnehmung 14 sozusagen um ein Negativ des Verstärkungsprofils 20.

Fig. 4 zeigt eine Kabinett-Projektion des Wandelements 10 von Fig. 3 mit der ersten Deckschicht 11, der zweiten Deckschicht 12, der Kernschicht 13 und der Ausnehmung 14. Die Deckschicht weist wiederum die Tiefe 4 auf. Die Längsrichtung der Ausnehmung 14 entspricht der Längsrichtung 1 des einzubringenden Verstärkungsprofils 20. Die zweite (obere) Deckschicht 12 ist in dieser Ansicht lediglich an den Rändern angedeutet, um den Gesamtaufbau zu verdeutlichen. Aus dieser Ansicht und aus Fig. 3 wird deutlich, dass die Ausnehmung 14 der Form oder dem Außenprofil des Verstärkungsprofils 20 so entspricht, dass dieses vollständig in der Kernschicht 13 aufgenommen wird und (in Ausführungsformen, in denen die Ausdehnung 3 des Verstärkungsprofils 20 in der Tiefenrichtung 2 der Tiefe 4 der Kernschicht entspricht), nach dem Einsetzen, mit der ersten Deckschicht 11 und der zweiten Deckschicht 12 in Kontakt kommt. Zudem wird aus Fig. 4 deutlich, dass das Verstärkungsprofil nicht über die gesamte Ausdehnung des Wandelements 10 in Längsrichtung 1 eingebracht werden muss, sondern in einer Variante lediglich an mechanisch besonders belasteten Bereichen der Leichtbauwand 100. Es ist jedoch auch möglich, das Verstärkungsprofil 20 über die gesamte Länge des Wandelements 10 einzubringen, falls dies gewünscht ist.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHENLISTE

- 1: Längsrichtung
- 2: Tiefenrichtung
- 3: Ausdehnung in Tiefenrichtung
- 4: Tiefe
- 10: Wandelement
- 11: erste Deckschicht
- 12: zweite Deckschicht
- 13: Kernschicht
- 14: Ausnehmung
- 20: Verstärkungsprofil
- 21: erster Schulterbereich
- 22: zweiter Schulterbereich
- 23: erste Seitenwand
- 24: zweite Seitenwand
- 25: untere Stützfläche
- 26: Kavität
- 27: Kernelement
- 100: Leichtbauwand

## Patentansprüche

1. Leichtbauwand (100), umfassend:
ein Wandelement (10); und
ein in einer Längsrichtung (1) langgestrecktes Verstärkungsprofil (20) mit einem ersten Schulterbereich (21), einem zweiten Schulterbereich (22), einer ersten Seitenwand (23), einer zweiten Seitenwand (24) und einer unteren Stützfläche (25); wobei:
die erste Seitenwand (23) mit dem ersten Schulterbereich (21) verbunden ist und quer dazu verläuft;
die zweite Seitenwand (24) mit dem zweiten Schulterbereich (22) verbunden ist und quer dazu verläuft;
die untere Stützfläche (25) mit der ersten Seitenwand (23) und der zweiten Seitenwand (24) verbunden ist und dadurch eine Kavität (26) zwischen der ersten Seitenwand (23), der zweiten Seitenwand (24) und der unteren Stützfläche (25) bildet;
das Wandelement (10) eine erste Deckschicht (11), eine zweite Deckschicht (12) und eine zwischen der ersten Deckschicht (11) und der zweiten Deckschicht (12) angeordnete Kernschicht (13) aufweist; und
das Verstärkungsprofil (20) in eine Ausnehmung (14) in der Kernschicht (13) eingebracht ist;
wobei die Kernschicht (13) ein Wabenkern ist.

2. Leichtbauwand (100) nach Anspruch 1, wobei der erste Schulterbereich (21) und der zweite Schulterbereich (22) parallel zu der zweiten Deckschicht (12) verlaufen.

3. Leichtbauwand (100) nach Anspruch 1 oder 2, wobei der erste Schulterbereich (21) und der zweite Schulterbereich (22) in einer gemeinsamen Ebene liegen.

4. Leichtbauwand (100) nach einem der vorstehenden Ansprüche, wobei die untere Stützfläche (25), die erste Seitenwand (23) und die zweite Seitenwand (24) des Verstärkungsprofils (20) U-förmig miteinander verbunden sind.

5. Leichtbauwand (100) nach einem der vorstehenden Ansprüche, wobei das Verstärkungsprofil (20) ein Bauteil ausgewählt aus der Gruppe bestehend aus einem thermoplastischen Formteil, einem pultrodiertem Profil, einem Metallprofil, einem Resin-Transfer-Moulding-Teil, RTM-Teil, und einem carbonfaserverstärktem Kunststoffteil, CFK-Teil, ist.

6. Leichtbauwand (100) nach einem der vorstehenden Ansprüche, wobei der erste Schulterbereich (21) und der zweite Schulterbereich (22) mit der zweiten Deckschicht (12) verklebt sind und die untere Stützfläche (25) mit der ersten Deckschicht (11) verklebt ist.

7. Leichtbauwand (100) nach einem der vorstehenden Ansprüche, wobei die Kavität (26) mit einem Kernelement (27) gefüllt ist.

8. Leichtbauwand (100) nach Anspruch 7, wobei das Kernelement (27) eine niedrigere Dichte als die Kernschicht aufweist.

9. Leichtbauwand (100) nach einem der vorstehenden Ansprüche, wobei eine Ausdehnung (3) des Verstärkungsprofils (20) in einer Tiefenrichtung (2) einer Tiefe (4) der Kernschicht (13) entspricht.
